(19) Europäisches Patentamt / European Patent Office / Office européen des brevets

(11) **EP 4 184 189 A1**

(12) **EUROPÄISCHE PATENTANMELDUNG**

(43) Veröffentlichungstag:
**24.05.2023 Patentblatt 2023/21**

(21) Anmeldenummer: **21209939.4**

(22) Anmeldetag: **23.11.2021**

(51) Internationale Patentklassifikation (IPC):
**G01R 31/367** (2019.01)

(52) Gemeinsame Patentklassifikation (CPC):
**G01R 31/367; B60L 58/16;** G01R 31/392;
G06F 30/20

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder: **Schricker, Barbara
91058 Erlangen (DE)**

(74) Vertreter: **Siemens Patent Attorneys
Postfach 22 16 34
80506 München (DE)**

(54) **COMPUTERGESTÜTZTES VERFAHREN ZUM BESTIMMEN EINES KAPAZITÄTSVERLUSTS EINES BATTERIESPEICHERS, COMPUTERPROGRAMMPRODUKT UND BATTERIESPEICHER**

(57) Die Erfindung betrifft ein computergestütztes Verfahren zum Bestimmen eines Kapazitätsverlusts eines Batteriespeichers, ein Computerprogrammprodukt und einen Batteriespeicher. Das Verfahren umfasst mehrere Schritte. Zunächst erfolgt das Erstellen einer Lastcharakteristik des Batteriespeichers. Anschließend erfolgt das Ermitteln von zeitlichen Verläufen simulierter Betriebsdaten einer Batteriezelle des Batteriespeichers während des Betriebs gemäß der Lastcharakteristik basierend auf einer Modellierung des Verhaltens der Batteriezelle mittels eines Ersatzschaltbildmodells in einem ECM-Modul. Die Betriebsdaten umfassen die Ruhespannung. Anschließend erfolgt das Analysieren der zeitlichen Verläufe der Betriebsdaten in einem Analysemodul und das Ermitteln einer minimalen Ruhespannung und einer maximalen Ruhespannung in dem Analysemodul. Anschließend erfolgt das Ermitteln einer Ruhespannungsdifferenz zwischen den zeitlichen Verläufen der minimalen Ruhespannung und der maximalen Ruhespannung und das Ermitteln einer mittleren Ruhespannung in dem Analysemodul. Anschließend erfolgt das Ermitteln des Kapazitätsverlusts einer Batteriezelle in einem Alterungsmodul basierend auf einem Alterungsmodell, welches auf der Ruhespannungsdifferenz und der mittleren Ruhespannung als Eingangsgröße basiert.

FIG 1

EP 4 184 189 A1

**Beschreibung**

Die Erfindung betrifft ein computergestütztes Verfahren zum Bestimmen eines Kapazitätsverlusts eines Batteriespeichers, ein Computerprogrammprodukt und eine Batteriespeicher.

Lithium-Ionen-Akkumulatoren, im Folgenden auch Lithium-Ionen-Batterien genannt, werden aufgrund ihrer hohen Leistungsdichte und Energiedichte in mobilen und stationären Anwendungen als Energiespeicher eingesetzt. Um diese elektrochemischen Energiespeicher sicher, zuverlässig und möglichst lang wartungsfrei betreiben zu können, ist eine möglichst genaue Kenntnis kritischer Betriebszustände, insbesondere hinsichtlich des Ladezustands (engl.: State of Charge) und hinsichtlich des Alterungszustands (engl: State of Health), nötig.

Es ist bekannt, dass die Alterung einer Batterie, insbesondere die sogenannte zyklische Alterung durch hohe Temperaturen, das schnelle Laden bei niedrigen Temperaturen, in Abhängigkeit des Ladezustands und der Entladetiefe und der Ladeleistung und Entladeleistung negativ beeinflusst werden kann. Es ist somit möglich, dass derselbe Typ einer Batteriezelle in Abhängigkeit der genannten Parameter eine große unterschiedliche Anzahl von Lastzyklen bewerkstelligen kann.

Für eine technische Auslegung eines Batteriespeichers ist es somit notwendig, die Lebensdauer des Batteriespeichers in Abhängigkeit der späteren Anwendung, insbesondere in Abhängigkeit einer späteren Lastcharakteristik und/oder Umgebungsbedingungen, abzuschätzen.

Eine basierend auf physikalischen und/oder chemischen Messungen ermittelter Verlauf der zukünftigen Alterung in Abhängigkeit des Lastprofils, des Arbeitspunkts und der Umgebungsbedingungen ist aufgrund der Nichtlinearität der zugrundeliegenden physikalischen und chemischen Prozesse und deren komplexen Wechselwirkungen nur schwer durchzuführen.

Zur Bestimmung des erwartbaren Alterungsverlaufs wird im Stand der Technik mittels Messungen vor der Auslegungsphase eines Batteriesystems eine umfangreiche Alterungscharakteristik der verwendeten Batteriezelle bestimmt. Die reale Alterungsgeschwindigkeit mit realen Lastprofilen wird häufig nicht getestet, weil solche Tests zu zeitaufwendig sind. Vielmehr wird in sogenannten Rafftests die Alterungsgeschwindigkeit, oder die Zyklenstabilität, an komprimierten Lastprofilen bestimmt. Mit diesen Ergebnissen werden empirische Alterungsmodelle parametriert, mit deren Hilfe später der Alterungsverlauf in der Anwendung abgeschätzt wird.

Die Vorhersage des Alterungsverlaufs einer Batterie gestaltet sich nachteilig komplex. Häufig ist die Parametrierung eines aussagekräftigen Alterungsmodells nachteilig sehr zeitaufwendig. Die physikalischen oder elektrochemischen Parameter, die die Alterung beeinflussen, beispielsweise die Elektrodenpotentiale, sind für den Anwender oder Batterieintegrator nicht direkt zugänglich. Ersatzweise wird in den Alterungsmodellen deshalb mit zugänglichen Parametern wie dem Ladezustand gerechnet. Um die komplexen Zusammenhänge mittels mathematischer Formeln beschreiben zu können, werden weitere Vereinfachungen getroffen. Diese machen die Alterungsmodelle nachteilig ungenau.

Dies hat nachteilig zur Folge, dass Batteriespeicher größer dimensioniert werden als es die Leistungs- und Lebensdaueranforderungen eigentlich erfordern würden, um auch am Ende des Auslegungszeitraumes eine ausreichende Leistung zu gewährleisten und somit Haftungs- und Gewährleistungszusagen einhalten zu können.

Aufgabe der vorliegenden Erfindung ist es daher, ein Verfahren anzugeben, welches das Alterungsverhalten von Batteriespeichern gegenüber dem Stand der Technik zuverlässiger und genauer ermittelt, ohne die Komplexität zu erhöhen.

Aufgabe der vorliegenden Erfindung ist es daher, ein Verfahren anzugeben, welches das Alterungsverhalten zuverlässig und genau bei verringerter Komplexität ermittelt.

Die Aufgabe wird erfindungsgemäß mit einem computergestützten Verfahren gemäß Anspruch 1, einem Computerprogrammprodukt gemäß Anspruch 13 und einem Batteriespeicher gemäß Anspruch 14 gelöst.

Das erfindungsgemäße computergestützte Verfahren zum Simulieren eines Kapazitätsverlusts eines Batteriespeichers umfasst mehrere Schritte. Zunächst wird eine Lastcharakteristik des Batteriespeichers erstellt. Anschließend werden in einem ECM-Modul zeitliche Verläufe simulierter Betriebsdaten basierend auf einer Modellierung des Verhaltens des Batteriespeichers gemäß der Lastcharakteristik als Eingangsdaten mittels eines Ersatzschaltbildmodells ermittelt, wobei die simulierten Betriebsdaten die Ruhespannung umfassen. In einem Analysemodul werden aus den zeitlichen Verläufen der Betriebsdaten eine minimale Ruhespannung und eine maximale Ruhespannung ermittelt. Weiterhin werden Ruhespannungsdifferenzen zwischen der minimalen Ruhespannung und der maximalen Ruhespannung in dem Analysemodul ermittelt. In dem Analysemodul werden auch mittlere Ruhespannungen ermittelt. Anschließend erfolgt das Ermitteln des Kapazitätsverlusts des Batteriespeichers in einem Alterungsmodul basierend auf einem Alterungsmodell, welches auf den Ruhespannungsdifferenzen und den mittleren Ruhespannungen als Eingangsgröße basiert.

Das Ermitteln der minimalen Ruhespannung und der maximalen Ruhespannung erfolgt insbesondere derart, dass die zeitlichen Verläufe der Betriebsdaten in Abschnitte unterteilt werden, wobei die minimale und maximale Ruhespannung innerhalb dieser Abschnitte ermittelt werden.

Das erfindungsgemäße Computerprogrammprodukt, welches direkt in einen Speicher einer programmierbaren Recheneinheit ladbar ist, umfasst Programmcode-Mittel, um das erfindungsgemäße computergestütztes Verfahren auszuführen, wenn das Computerprogrammprodukt in der Recheneinheit ausgeführt wird.

Der erfindungsgemäße Batteriespeicher umfasst eine Recheneinheit, welche eingerichtet ist, das erfindungsgemäße computergestützte Verfahren auszuführen.

Als Lastcharakteristik wird die Last, bzw. Leistung verstanden, mit welcher in einem definierten Betriebszeitraum der Batteriespeicher betrieben wird. Betreiben meint hier sowohl Lade- als auch Entladevorgänge. Insbesondere werden hier typische Lastcharakteristiken von elektrisch betriebenen Fortbewegungsmitteln (KFZ, Schifffahrt, Zug) oder von Heimspeichern aus Messdaten oder Simulationen eingesetzt.

Ermitteln einer Lastcharakteristik meint hier, dass insbesondere in Abhängigkeit der zukünftigen Art der Benutzung bzw. Anwendung des Batteriespeichers und/oder des zukünftigen Einsatzortes (insbesondere klimatische Bedingungen) eine Lastcharakteristik ermittelt wird. Das Ermitteln kann insbesondere durch Messung, durch eine aus einer Simulation bekannte Lastcharakteristik für einen Betriebszeitraum oder durch das Zusammenführen mehrerer einzelner Lastcharakteristiken zu einer Lastcharakteristik, erfolgen.

Insbesondere kann ein Batteriespeicher als Traktionsbatterie in einem Zug eingesetzt werden. Basierend auf insbesondere dem Geländeprofil, dem Gewicht des Zuges, der Länge bis zur nächsten Haltestelle, der geforderten Ladegeschwindigkeit und dem Geschwindigkeitsprofil des Zuges wird die Lastcharakteristik bestimmt und ein Leistungs- und Energiebedarf ermittelt, der von der Batterie gedeckt werden muss.

Weiterhin kann der Batteriespeicher insbesondere als ein stationärer Speicher, der regenerative Energie z. B. aus Photovoltaik zwischenspeichern soll, eingesetzt werden. Die zu speichernde Energie wird durch die Leistung der PhotovoltaikAnlage - also indirekt über die Sonneneinstrahlung - ermittelt. Die Speichergröße ergibt sich insbesondere durch die Größe der angeschlossenen Photovoltaikanlage und durch die elektrischen Verbraucher des Netzes. Die Überlagerung der Energiegewinnung über die Zeit und des Energieverbrauchs über die Zeit ergibt hier die Lastcharakteristik des Batteriespeichers.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren. Es ist im Sinne der Erfindung sowohl möglich, dass die Funktion einzelner Module auf getrennten Prozessoren und Speichereinheiten oder auf gemeinsamen Prozessoren und Speichereinheit ausgeführt werden.

Als ECM-Modul (ECM = "Equivalent Circuit Model") wird die Einheit verstanden, in welcher mittels des Ersatzschaltbild-Modells, Betriebsdaten einer Batteriezelle des Batteriespeichers ermittelt werden.

Als Analysemodul wird die Einheit verstanden, in welcher die Betriebsdaten, welche in dem ECM-Modul ermittelt wurden, analysiert werden.

Als Alterungsmodul wird die Einheit verstanden, in welcher basierend auf den analysierten Daten mittels eines Alterungsmodells der Kapazitätsverlust des Batteriespeichers ermittelt wird.

Als Batteriespeicher wird insbesondere ein Lithium-Ionen-Akkumulator verstanden.

Es wurde im Rahmen der Erfindung überraschend erkannt, dass in das Alterungsmodell die mittlere Ruhespannung und die Ruhespannungsdifferenz, eingehen sollte, um das Alterungsverhalten des Batteriespeichers zuverlässig und effizient zu ermitteln. Es wurde auch erkannt, dass in dem Fall der Verwendung der Ruhespannungsdaten weder die Elektrodenpotentiale noch die Tiefe der Ladung (engl. "depth of Charge" DOD) noch der mittlere Ladezustand (engl. "state of charge" SOC) in die Ermittlung des Alterungsverhaltens einzugehen brauchen, wobei dennoch eine zuverlässige Ermittlung der Alterung erfolgt. Vorteilhaft ist es mit dem erfindungsgemäßen Verfahren möglich, das Alterungsverhalten, in anderen Worten den Kapazitätsverlust, eines Batteriespeichers zuverlässig vorherzusagen. Somit ist eine Vorhersage über den Kapazitätsverlust eines bestimmten Batteriespeichers möglich. Der Batteriespeicher kann dann vorteilhafter Weise für bestimmte Anwendungen bevorzugt eingesetzt werden. Vorteilhaft kann dadurch vermieden werden, dass eine Überdimensionierung der Batteriespeicher aus Sicherheitsgründen erfolgen muss.

Ein Vorteil der Verwendung von Ruhespannungsdifferenzen und Ruhespannungen im Alterungsmodell ist, dass diese Größen direkt aus den Betriebsdaten abgeleitet werden können. Weiterhin beschrieben diese Größen die physikalischen Hintergründe, die hinter den Alterungsmechanismen stecken, besser als die Variablen Ladetiefe/Entladetiefe (Depth of Discharge - DOD) und Ladezustand (state of charge SOC). Vorteilhafterweise erlaubt diese Methode somit eine exaktere modellgestützte Berechnung der Alterung gegenüber aktuellen dem Stand der Technik.

In einer vorteilhaften Weiterbildung und Ausgestaltung der Erfindung wird basierend auf einer Modellierung des Verhaltens der Batteriezelle bei einem Betrieb mit der Lastcharakteristik mittels eines Ersatzschaltbildmodells in dem ECM-Modul neben der Ruhespannung ein Strom, eine Temperatur, und/oder eine C-Rate des Batteriespeichers ermittelt. In dem Analysemodul werden insbesondere bei einer Verwendung des Rainflow-Counting Verfahrens die Signale in einzelne Abschnitte unterteilt und daraus Mittelwerte von Ruhespannung, Strom, Temperatur und/oder Differenzen aus den minimalen und maximalen Werten der Ruhespannung gebildet. Durch die Integration des Stromes werden die anteiligen äquivalenten Vollzyklen ermittelt. Anteilig meint hier, dass die Verläufe des betrachteten Zeitraumes in einzelne Abschnitte unterteilt werden und für jeden dieser Abschnitte berechnet wird, wie viele äquivalente Vollzyklen dieser Abschnitt entspricht. Typischerweise beträgt ein Abschnitt einen Anteil von weniger als einem äquivalenten Vollzyklus.

Als Eingangsgröße für das Alterungsmodell werden die anteiligen äquivalenten Vollzyklen, mit den jeweils zugehörigen Ruhespannungsdifferenzen sowie den Mittelwerten der Ruhespannung, des Stroms, der C-Rate und/oder der Temperatur verwendet.

Der Kapazitätsverlust wird dann insbesondere basierend auf der Ruhespannungsdifferenz, der mittleren Ruhespannung sowie wenigstens einer der Größen Strom, Temperatur, Anzahl äquivalenter Vollzyklen, C Rate und/oder deren mittleren Größen ermittelt. Vorteilhaft wird das Alterungsverhalten der Batteriezelle, in anderen Worten der Kapazitätsverlust der Batteriezelle, exakter beschrieben als das nach bisherigem Stand der Technik erfolgt.

In einer weiteren vorteilhaften Ausgestaltung und Weiterbildung der Erfindung erfolgt die Analyse der simulierten Betriebsdaten in dem Analysemodul auf Basis eines gleitenden Zeitfensters oder mittels eines Rainflow-Counting Verfahrens. Die Länge des gleitenden Zeitfensters wird dabei derart an die Lastcharakteristik angepasst, dass es in der Lage ist, die wesentlichen Änderungen der Betriebspunkte wiederzugeben. Besonders vorteilhaft wird der Betriebszeitraum mittels eines Rainflow-Counting Verfahrens analysiert. Das Rainflow-Counting Verfahren beruht auf der Detektion von Umkehrpunkten und teilt den Verlauf in einzelne Abschnitte auf. Die Aufteilung des Verlaufs in die einzelnen Abschnitte ist dabei bereits an den Verlauf angepasst. Dies ermöglicht eine zusätzlich erhöhte Genauigkeit der Bestimmung des Kapazitätsverlusts.

In einer weiteren vorteilhaften Ausgestaltung und Weiterbildung der Erfindung werden als Eingangsgröße für das Alterungsmodell ein Ruhespannungs-Referenzwert, eine Referenz-Temperatur, eine Referenz-Ruhespannungsdifferenz und eine Referenz-C-Rate verwendet. Vorteilhaft ermöglicht dies die Optimierung des Alterungsmodells, insbesondere das Anpassen des Alterungsmodells an Referenzzustände. Vorteilhaft wird das Alterungsmodell hierdurch robuster.

In einer weiteren vorteilhaften Ausgestaltung und Weiterbildung der Erfindung umfasst das Alterungsmodell wenigstens einen Temperaturterm, einen Ruhespannungsterm, einen Ruhespannungsdifferenzterm, einen C-Raten-Term und einen äquivalenten Vollzyklen-Term. Besonders vorteilhaft beschreibt das Alterungsmodell somit die physikalischen Alterungsvorgänge der Batteriezelle umfassend, sodass das Modell eine mit hoher Genauigkeit den Kapazitätsverlust der Batteriezelle beschreiben, bzw. vorhersagen kann. Besonders vorteilhaft ist es nicht nötig, die Elektrodenpotentiale oder die Tiefe der Ladung (DOD) für ein Modell ermitteln zu müssen. Durch das Verwenden von mehr als jeweils einem dieser Terme können mehrere der Alterung zugrunde liegende Mechanismen im Modell abgebildet werde, wodurch wiederum vorteilhaft die Genauigkeit des Modells erhöht werden kann.

In einer weiteren vorteilhaften Ausgestaltung und Weiterbildung der Erfindung umfasst jeder Term des Alterungsmodells wenigstens einen Optimierungsparameter, wobei die Bestimmung der Optimierungsparameter durch eine Anpassung, in anderen Worten ein Fitting, an wenigstens ein synthetisches Lastprofil erfolgt. Als synthetisches Lastprofil wird ein Lastprofil verstanden, welches im Labor einer Batteriezelle aufgeprägt wird. Die synthetischen Lastprofile werden dabei so gewählt, dass der getestete Versuchsraum die typischen Arbeitspunkte, die in der späteren Anwendung zu erwarten sind, einschließt. Mit DOE (Design of Experiment) Methodiken wird die Anzahl der benötigten Messungen minimiert. Im Labor wird der Batteriespeicher mit dem synthetischen Lastprofil betrieben und es werden gemessene Betriebsdaten erzeugt.

In einer weiteren vorteilhaften Ausgestaltung und Weiterbildung der Erfindung wird als der Temperatur-Term $a \times e^{b \times (T(t)-T_{ref})}$ verwendet, wobei a und b Optimierungsparameter sind. Vorteilhaft liegen bei diesem Temperatur-Term die Optimierungsparameter in der gleichen Größenordnung wie die andern im Modell verwendeten Optimierungsparameter. Diese Eigenschaft macht das Modell robuster. Ein lokales Minimum wird effizienter aufgefunden. Bei Verwendung eines Arrhenius-Terms nach Stand der Technik würden sich die Optimierungsparameter um Größenordnungen voneinander unterscheiden.

In einer weiteren vorteilhaften Ausgestaltung und Weiterbildung der Erfindung wird basierend auf dem Kapazitätsverlust und End-of-Life-Parametern eine verbleibende Lebensdauer des Batteriespeichers ermittelt. Unter End-of-Life-Parameter wird in diesem Zusammenhang die Restkapazität der Batterie verstanden, die die Batterie bei Lebensdauerende noch hat. Dieser Wert wird bei der Auslegung der Batterie per Definition festgelegt. In der Praxis liegt dieser Wert typischerweise bei 70% bis 80% der anfänglichen Restkapazität.

In einer weiteren vorteilhaften Ausgestaltung und Weiterbildung der Erfindung wird in einem Auslegungsmodul ein recycelter Batteriespeicher aus wenigstens zwei Batteriespeicherzellen zusammengesetzt simuliert, wobei ein Optimum für eine verbleibende Lebensdauer des recycelten Batteriespeichers und/oder für Speicherkosten pro Energieeinheit in dem recycelten Batteriespeicher ermittelt wird. Vorteilhaft können somit Batteriezellen in einem Batteriespeicher zusammengeführt werden, insbesondere auch in Second Life Anwendungen, welche eine ähnlichen Alterungszustands aufweisen somit wird es ermöglicht, einen zuverlässigeren Batteriespeicher mit möglichst hoher Lebensdauer zusammenzustellen.

In einer weiteren vorteilhaften Ausgestaltung und Weiterbildung der Erfindung wird in dem Auslegungsmodul basierend auf dem ermittelten Kapazitätsverlust des Batteriespeichers eine Anordnung der Batteriezellen ermittelt, mit der der Batteriespeicher in der Lage ist, die geplante Lebensdauer der Batteriezellen zu erreichen ohne den Speicher überdimensionieren zu müssen.

In einer weiteren vorteilhaften Ausgestaltung und Weiterbildung der Erfindung ist die Recheneinheit lokal getrennt vom Batteriespeicher angeordnet und eingerichtet, mit dem Batteriespeicher per Fernzugriff über ein Netzwerk Daten auszutauschen. Vorteilhaft ist es somit auch möglich, einen Alterungszustands aus der Ferne analysieren zu können.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:

Figur 1    eine Recheneinheit mit einem ECM-Modul, einem Analysemodul und einem Alterungsmodul;

Figur 2    ein Verfahrensschema des Verfahrens zum Bestimmen des Kapazitätsverlusts eines Batteriespeichers.

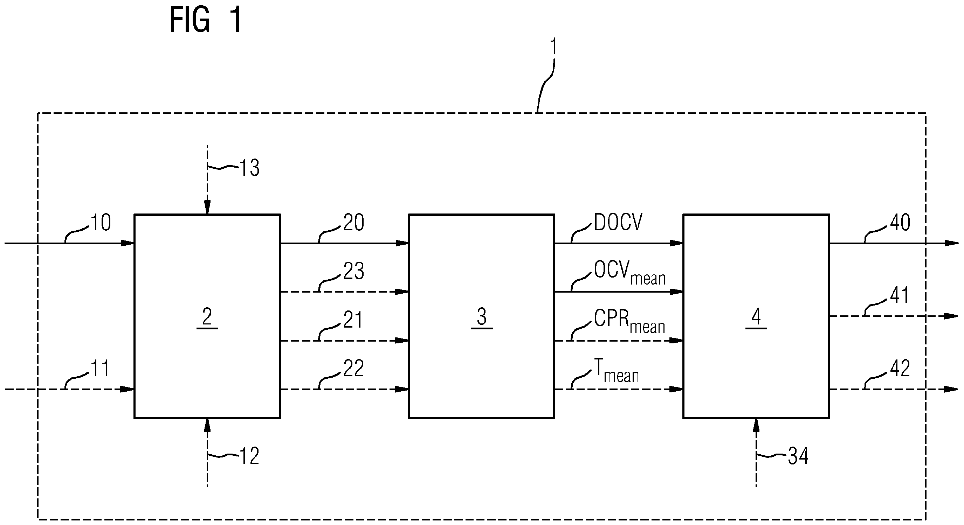

Figur 1 zeigt eine Recheneinheit 1 mit einem ECM-Modul 2, einem Analysemodul 3 und einem Alterungsmodul 4. In das ECM-Modul 2 wird in Abhängigkeit einer Anwendung des Batteriespeichers eine definierte Lastcharakteristik 10 als Eingangsgröße zugeführt. Weiterhin können Umgebungsbedingungen 11 als Eingangsgröße in das ECM-Modul 2 zugeführt werden. In dem ECM-Modul 2 wird der Batteriespeicher mittels eines Ersatzschaltbildmodells nachgebildet. Das ECM-Modul 2 erhält vorteilhafterweise Konfigurationswerte 12 für das Ersatzschaltbildmodell. Weiterhin können dem ECM-Modul 2 Startwerte 13 für das Abbilden des Batteriespeichers mittels eines Ersatzschaltbildmodells zugeführt werden. In dem ECM-Modul werden dann mittels des Ersatzschaltbild-Modells die zu einer Lastcharakteristik zugehörigen Betriebsdaten einer Batteriezelle des Batteriespeichers simuliert. Der Betrieb des Batteriespeichers wird gemäß der dem Modell zugeführten Lastcharakteristiken abgebildet. Die simulierten Betriebsdaten umfassen die Ruhespannung 20. Die ermittelte Ruhespannung 20 sowie beispielsweise der Strom 21, eine Betriebsspannung 22, und eine Betriebstemperatur 23 werden an das Analysemodul 3 übertragen. In dem Analysemodul 3 wird der zeitliche Verlauf der Signale, insbesondere der der Ruhespannung OCV analysiert. Es erfolgt eine Bestimmung von minimalen Ruhespannungen und maximalen Ruhespannungen. Darauf basierend werden Ruhespannungsdifferenzen DOCV zwischen den der minimalen Ruhespannung und der maximalen Ruhespannung und mittlere Ruhespannungen $OCV_{mean}$ in dem Analysemodul 3 analysiert. Es können in dem Analysemodul 3 auch mittlere C-Raten $CPR_{mean}$ oder eine mittlere Temperaturen $T_{mean}$ und anteilige äquivalente Vollzyklen bestimmt werden. Die im Analysemodul 3 ermittelten Ruhespannungsdifferenzen DOCV, die mittleren Ruhespannungen $OCV_{mean}$ sowie die mittleren Temperaturen $T_{mean}$ und die mittleren C-Raten $CPR_{mean}$ werden gemeinsam mit den anteiligen äquivalenten Vollzyklen EFC an das Alterungsmodul 4 übertragen.

In dem Alterungsmodul 4 wird mittels eines Alterungsmodells der Kapazitätsverlust eines Batteriespeichers ermittelt, wobei das Alterungsmodell auf der Ruhespannungsdifferenz DOCV und der mittleren Ruhespannung $OCV_{mean}$ als Eingangsgröße basiert.

Dem Alterungsmodul werden die Modellgleichung und die zugehörigen Modellparameter zugeführt. Modellgleichung und Modellparameter werden vorab auf Basis der Labormessungen bestimmt. Alternativ könnte die Bestimmung der Modellparameter auch in dem Alterungsmodul selbst erfolgen. In diesem Fall müssten dem Alterungsmodul aufbereitete Messdaten aus den Labormessungen zugeführt werden.

Beispielhaft zeigt Gleichung 1 einen Modellansatz, welcher den Kapazitätsverlust 40 (c(t)/c(t=0)) in Abhängigkeit der äquivalenten Vollzyklen EFC (engl. "equivalent full cylces" basierend auf der Ruhespannungsdifferenz DOCV und der mittleren Ruhespannung $OCV_{mean}$ beschreibt. Es gehen für eine erhöhte Zuverlässigkeit der Ermittlung auch die Temperatur T, die C-Rate CPR sowie die Anzahl der äquivalenten Vollzyklen EFC in das Ermitteln der Alterung in dem Alterungsmodul 4 mit ein. Es wird weiterhin eine Referenzruhespannung $OCV_{ref}$, eine Referenztemperatur $T_{ref}$ und eine Referenz-Ruhespannungsdifferenz $DOCV_{ref}$ eingesetzt.

$$\frac{c(EFC(t))}{c(EFC(t=0))} = 1 - 10^{-3} \times a_2 \times e^{t2\times(T-T_{ref})} \times e^{s2\times(OCV_{mean}-OCV_{ref})} \times$$

$$e^{d2\times(D_{OCV}-D_{OCV_{ref}})} \times e^{i2\times(CPR-CPR_{ref})} \times EFC^{\beta2} - 10^{-3} \times a_3 \times e^{t3\times(T-T_{ref})} \times EFC^{\beta2} \quad (1)$$

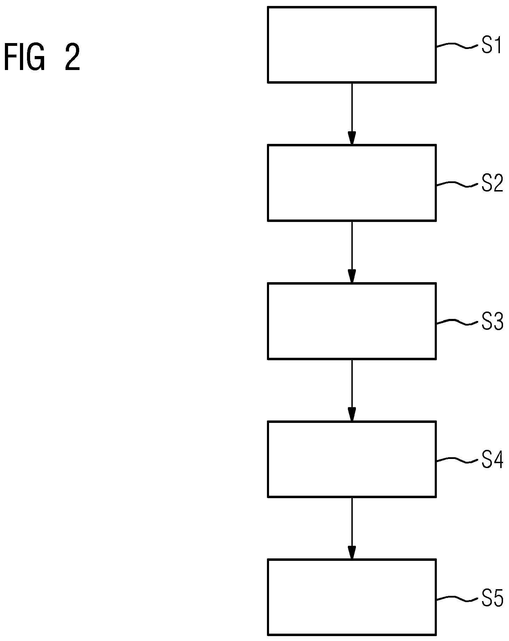

Figur 2 zeigt ein Verfahrensschema des Verfahrens zum Ermitteln eines Kapazitätsverlusts eines Batteriespeichers. In einem ersten Schritt S1 erfolgt das Ermitteln einer Lastcharakteristik eines Batteriespeichers. In einem zweiten Schritt S2 erfolgt das Ermitteln von zeitlichen Verläufen simulierter Betriebsdaten des Batteriespeichers gemäß der Lastcharakteristik. Das Ermitteln erfolgt basierend auf einer Modellierung des Verhaltens der Batteriezelle mittels eines Ersatzschaltbildmodells in einem ECM-Modul 2. Die Betriebsdaten umfassen dabei die Ruhespannung OCV. In einem dritten Schritt S3 erfolgt das Analysieren der Betriebsdaten in einem Analysemodul 3. In dem Analysemodul 3 erfolgt auch das Ermitteln minimalen Ruhespannungen und maximaler Ruhespannungen und mittlerer Ruhespannungen $OCV_{mean}$. In einem vierten Schritt S4 erfolgt dann das Ermitteln einer Ruhespannungsdifferenz DOCV zwischen den minimalen Ruhespannungen und maximalen Ruhespannungen. In einem fünften Schritt S5 erfolgt das Ermitteln des Kapazitätsverlusts des Batteriespeichers in einem Alterungsmodul 4 basierend auf einem Alterungsmodell, wobei das Alterungsmodell auf der Ruhespannungsdifferenz DOCV und der mittleren Ruhespannung $OCV_{mean}$ als Eingangsgröße basiert. Der Kapazitätsverlust wird besonders vorteilhaft mittels des Alterungsmodells gemäß Gleichung 1 ermittelt.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

Bezugszeichenliste

| | |
|---|---|
| 1 | Recheneinheit |
| 2 | ECM-Modul |
| 3 | Analysemodul |
| 4 | Alterungsmodul |
| 10 | Lastcharakteristik |
| 11 | Umgebungsbedingungen |
| 12 | Konfigurationswerte |
| 13 | Startwerte |
| 20 | Ruhespannung |
| 21 | Strom |
| 22 | Spannung |
| 23 | Temperatur |
| 33 | mittlere Temperatur |
| 34 | Modellparameter |
| 40 | Kapazitätsverlust |
| 41 | Lebensdauer |
| 42 | Kosten pro gespeicherter Energieeinheit |
| S1 | Ermitteln einer Lastcharakteristik eines Batteriespeichers |
| S2 | Ermitteln von Betriebsdaten einer Batteriezelle |
| S3 | Analysieren der Betriebsdaten in einem Analysemodul |
| S4 | Ermitteln einer Ruhespannungsdifferenz und einer mittleren Ruhespannung in dem Analysemodul |
| S5 | Ermitteln des Kapazitätsverlusts einer Batteriezelle in einem Alterungsmodul |
| OCV | Ruhespannung |
| $OCV_{mean}$ | mittlere Ruhespannung |
| DOCV | Ruhespannungsdifferenz |
| $CPR_{mean}$ | mittlere C-Rate |

**Patentansprüche**

1. Computergestütztes Verfahren zum Simulieren eines Kapazitätsverlusts eines Batteriespeichers mit mehreren Schritten:

- Erstellen einer Lastcharakteristik des Batteriespeichers,
- Ermitteln von zeitlichen Verläufen von simulierten Betriebsdaten des Batteriespeichers mit der Lastcharakteristik als Eingangsdaten basierend auf einer Modellierung des Verhaltens des Batteriespeichers mittels eines Ersatzschaltbildmodells in einem ECM-Modul (2), wobei die simulierten Betriebsdaten die Ruhespannung (OCV) umfassen,
- Analysieren der Betriebsdaten in einem Analysemodul (3), wobei minimale Ruhespannungen und maximale Ruhespannungen aus den zeitlichen Verläufen der simulierten Betriebsdaten ermittelt werden,
- Ermitteln von Ruhespannungsdifferenzen (DOCV) zwischen den minimalen Ruhespannungen und den maximalen Ruhespannungen und Ermitteln mittlerer Ruhespannungen ($OCV_{mean}$) in dem Analysemodul (3),

- Ermitteln des Kapazitätsverlusts des Batteriespeichers in einem Alterungsmodul (4) basierend auf einem Alterungsmodell, welches auf den Ruhespannungsdifferenzen (DOCV) und mittleren Ruhespannungen ($OCV_{mean}$) als Eingangsgröße basiert.

2. Computergestütztes Verfahren nach Anspruch 1, wobei basierend auf einer Modellierung des Verhaltens des Batteriespeichers mittels eines Ersatzschaltbildmodells in dem ECM-Modul (2) ein Strom (21), eine C-Rate (CPR), eine Temperatur (23) und/oder eine Anzahl äquivalenter Vollzyklen des Batteriespeichers ermittelt wird.

3. Computergestütztes Verfahren nach Anspruch 2, wobei in dem Analysemodul (3) ein Mittelwert der Ruhespannung ($OCV_{mean}$), des Stroms, der Temperatur ($T_{mean}$) und/oder der anteiligen äquivalenten Vollzyklen ermittelt wird.

4. Computergestütztes Verfahren nach einem der vorhergehenden Ansprüche, wobei als Eingangsgrößen für das Alterungsmodell die anteiligen äquivalenten Vollzyklen (EFC), der Strom, die C-Rate ($CPR_{mean}$) und/oder die Temperatur ($T_{mean}$) verwendet wird.

5. Computergestütztes Verfahren nach einem der vorhergehenden Ansprüche, wobei die Analyse der simulierten Betriebsdaten in dem Analysemodul (3) auf Basis eines gleitenden Zeitfensters oder mittels eines Rainflow-Counting-Verfahrens erfolgt.

6. Computergestütztes Verfahren nach einem der vorhergehenden Ansprüche, wobei als Eingangsgröße für das Alterungsmodell ein Ruhespannungs-Referenzwert ($OCV_{ref}$), eine Referenz-Temperatur ($T_{ref}$), eine Referenz-Ruhespannungsdifferenz ($DOC_{ref}$) und eine Referenz-C-Rate ($CPR_{ref}$) verwendet wird.

7. Computergestütztes Verfahren nach einem der vorhergehenden Ansprüche, wobei das Alterungsmodell wenigstens einen Temperaturterm, einen Ruhespannungsterm, einen Ruhespannungsdifferenzterm, einen C-Raten-Term und einen äquivalenter Vollzyklen-Term umfasst.

8. Computergestütztes Verfahren nach Anspruch 7, wobei jeder Term des Alterungsmodells wenigstens einen Optimierungsparameter umfasst, wobei die Bestimmung der Optimierungsparameter durch eine Anpassung an wenigstens ein synthetisches Lastprofil erfolgt.

9. Computergestütztes Verfahren nach Anspruch 7 oder 8, wobei als der Temperaturterm $a \times e^{b \times (T(t) - T_{ref})}$ verwendet wird, wobei a und b Optimierungsparameter sind.

10. Computergestütztes Verfahren nach einem der vorhergehenden Ansprüche, wobei basierend auf dem Kapazitätsverlust (40) und End-of-Life-Parametern eine verbleibende Lebensdauer (41) der Batteriezelle ermittelt wird.

11. Computergestütztes Verfahren nach einem der vorhergehenden Ansprüche, wobei in einem Auslegungsmodul ein recycelter Batteriespeicher aus wenigstens zwei Batteriespeicherzellen zusammengesetzt simuliert wird, wobei ein Optimum für eine verbleibende Lebensdauer (41) des recycelten Batteriespeichers und/oder für Speicherkosten pro Energieeinheit in dem recycelten Batteriespeicher ermittelt wird.

12. Computergestütztes Verfahren nach einem der Ansprüche 10 oder 11, wobei basierend auf dem ermittelten Kapazitätsverlust und der verbleibenden Lebensdauer des Batteriespeichers in einem Auslegungsmodul eine Anordnung der Batteriezellen ermittelt wird, welche eine maximale Lebensdauer der Batteriezellen aufweist.

13. Computerprogrammprodukt, welches direkt in einen Speicher einer programmierbaren Recheneinheit ladbar ist, mit Programmcode-Mitteln, um ein Verfahren nach einem der Ansprüche 1 bis 12 auszuführen, wenn das Computerprogrammprodukt in der Recheneinheit ausgeführt wird.

14. Batteriespeicher mit einer Recheneinheit (1), welche eingerichtet ist, ein Verfahren gemäß einem der Ansprüche 1 bis 12 computergestützt auszuführen.

15. Batteriespeicher gemäß Anspruch 14, wobei die Recheneinheit (1) lokal getrennt vom Batteriespeicher angeordnet ist und eingerichtet ist, mit dem Batteriespeicher per Fernzugriff über ein Netzwerk Daten auszutauschen.

FIG 1

FIG 2

EP 4 184 189 A1

Europäisches
Patentamt

European
Patent Office

Office européen
des brevets

**EUROPÄISCHER RECHERCHENBERICHT**

Nummer der Anmeldung

EP 21 20 9939

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SCHMALSTIEG JOHANNES ET AL: "A holistic aging model for Li(NiMnCo)O2based 18650 lithium-ion batteries", JOURNAL OF POWER SOURCES, ELSEVIER, AMSTERDAM, NL, Bd. 257, 13. Februar 2014 (2014-02-13), Seiten 325-334, XP028636618, ISSN: 0378-7753, DOI: 10.1016/J.JPOWSOUR.2014.02.012 * Seite 328, rechte Spalte – Seite 332, rechte Spalte; Abbildungen 13-15 * | 1-15 | INV. G01R31/367 |
| A | WO 2020/224724 A1 (TWAICE TECH GMBH [DE]) 12. November 2020 (2020-11-12) * Seite 5, Zeile 10 – Seite 26, letzter Zeile; Abbildungen 1-4,6,7,9 * | 1-15 | |
| A | EP 2 223 132 B1 (BOSCH GMBH ROBERT [DE]) 13. Juni 2018 (2018-06-13) * Absatz [0031] – Absatz [0033] * | 1-15 | |
| A | MADELEINE ECKER ET AL: "Development of a lifetime prediction model for lithium-ion batteries based on extended accelerated aging test data", JOURNAL OF POWER SOURCES, ELSEVIER, AMSTERDAM, NL, Bd. 215, 6. Mai 2012 (2012-05-06), Seiten 248-257, XP028433063, ISSN: 0378-7753, DOI: 10.1016/J.JPOWSOUR.2012.05.012 [gefunden am 2012-05-12] * Seite 252 – Seite 255; Tabelle 22 * | 1-15 | RECHERCHIERTE SACHGEBIETE (IPC) G01R G06F B60L |

Der vorliegende Recherchenbericht wurde für alle Patentansprüche erstellt

| Recherchenort | Abschlußdatum der Recherche | Prüfer |
|---|---|---|
| München | 4. Mai 2022 | Hof, Klaus-Dieter |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes Dokument

EPO FORM 1503 03.82 (P04C03)

EP 21 20 9939

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-05-2022

| Im Recherchenbericht angeführtes Patentdokument | Datum der Veröffentlichung | Mitglied(er) der Patentfamilie | Datum der Veröffentlichung |
|---|---|---|---|
| WO 2020224724 A1 | 12-11-2020 | CN 114072684 A | 18-02-2022 |
| | | DE 102019111979 A1 | 12-11-2020 |
| | | EP 3966579 A1 | 16-03-2022 |
| | | WO 2020224724 A1 | 12-11-2020 |
| EP 2223132 B1 | 13-06-2018 | DE 102007055255 A1 | 28-05-2009 |
| | | EP 2223132 A1 | 01-09-2010 |
| | | HU E039363 T2 | 28-12-2018 |
| | | WO 2009065656 A1 | 28-05-2009 |

EPO FORM P0461

Für nähere Einzelheiten zu diesem Anhang : siehe Amtsblatt des Europäischen Patentamts, Nr.12/82